# EUROPEAN PATENT SPECIFICATION

(11) **EP 0 817 422 B1**
(45) Date of publication and mention of the grant of the patent: **14.04.2004**
(21) Application number: 97117274.7
(22) Date of filing: 18.08.1993
(51) Int. Cl.: H04L 12/24

(54) **A method for implementing a managed object in a network management system**
Verfahren zur Implementierung eines verwalteten Objektes in einem Netzwerkverwaltungssystem
Procédé d'implémentation d'un objet géré dans un système de gestion de réseau

(30) Priority: 28.08.1992 SE 9202488; 05.02.1993 SE 9300363
(43) Date of publication of application: 07.01.1998
(62) Divisional of application: 93919758.8
(73) Proprietor: TELEFONAKTIEBOLAGET LM ERICSSON, 126 25 Stockholm (SE)
(72) Inventor: Carebrand, Per-Arne, 118 42 Stockholm (SE); Svedberg, Johan, 115 24 Stockholm (SE); Fantenberg, Johann, Yarraville, VIC 3013 (AU); Talldal, Björn, 161 46 Bromma (SE); Palsson, Martin, 141 44 Huddinge (SE); Gilander, Anders, 155 30 Nykvarn (SE); Sellstedt, Patrik, 124 71 Bandhagen (SE); Strömberg, Stefan, 112 37 Stockholm (SE)
(74) Representative: Rosenquist, Per Olof

(56) References cited:
- EP-A- 0 442 809
- US-A- 4 782 506
- US-A- 4 903 263

## Description

### Technical field

The present invention relates to a method for implementing a managed object in a management network with at least one managing system and at least one managed system, for telecom or open systems, said managed system consisting of subsystems forming each a part of the managed system including one or more managed objects.

With a "management network with at least one managing system and at least one managed system" is meant that the management network can include at least one managing system which can manage one or more managed systems, which likewise can form part of the management network.

With an open system is meant a system of the kind, which is defined in Reference Model of Open Systems Interconnection (OSI) for CCITT Applications, Rec. X.200.

To perform management activities in a management domain there must be at least one manager which is responsible for the management of the resources. A resource is something which includes concepts and ability of the domain. An example of a domain is a telecom network, where the resources are switches, trunks etc. and management units are e.g. operator tools and managing systems for the network.

For operation of telephone networks each individual company has used a number of different systems for operation and maintenance. CCITT has developed a standard model for operation and maintenance in telephone networks, called TMN (Telecommunication Management Networks). The basic principle of TMN is to indicate an organized network structure, which admits connection of various managing systems to telecom equipment. This is achieved by use of standardized protocols and interfaces. The telephone companies and other operators will require that future telecom networks are adapted to TMN.

CCITT has a recommendation for this under development, the M.3000-serie.

TMN considers all network nodes as network elements (NE). These network elements are made as telephone switches and transmission or transport network products.

The functional structure of TMN comprises
- management functions (OSF, Operations Support Functions), which manage application programs available for users, such as management functions for "Business Management" and service and network administration;
- data communication functions (DCF; Data Communications Functions), which manage data communication between the managing systems OSS and the managed systems NE;
- mediation functions (MF, Mediation Functions), which convert information (between e.g. managed objects), manage data, concentrate, reduce and edit, make decisions relating to e.g. threshold limits and store data, which identify equipment and networks;
- network element functions (NEF, Network Element Functions), which manage telecom processes as switching functions and transmission, and take part in management processes for telecommunication, as fault localisation and protection connections;
- functions for interface adaption (QAF, Q-Adapter Functions), which perform conversion of interfaces from non standard to standard;
- work station functions (WSF, Work Station Functions), which constitute the user terminals of TMN, show information and assist management technicians to manage the network.

TMN also includes an interface, called Q3. Q3 is besides being a communication protocol also an information model, which comprises data schemes, operations and notifications. The exact details of the Q3 interface and its protocols appear from the CCITT recommendations Q961 and Q962.

TMN considers all physical and logical objects as managed objects, which in TMN are referred to as MO (Managed Objects), a denomination which will be used alternately also here henceforth. Managed objects are data images of such physical or logical resources as wires, circuits, signal terminals, transmission routes, events logs, alarm reports etc..

A specific relationship occurs between a resource and a managed object. A resource can be related to one or more MO or none at all. On the other hand an MO can be related to one or more resources or none at all. This relationship is important if an MO is affected by some form of operation or maintenance activity. An MO must not be removed before the functions to which it is subordinated have themselves been removed. This information model is based upon object orientation and the relation concept.

The managing system (OSS- Operation Support System) treats network elements and subordinated managing systems as a collection of managed objects in an imagined data base MIB (Management Information Base). These managed objects are constituted by instances of an MO class, such as a number of signal terminals of the same type. Each terminal will thus constitute an instance.of the class signal terminals..

In TMN there also exists the concept MIM (Management Information Model), which refers collectively to all information related to managed objects. MIM is a model of all attributes, relations, operations and notifications referable to managed objects. To be able to search for MO-instances a management information tree MIT (Management Information Tree) is used. This tree structure starts in the network and indicates network elements and subscribers or equipment.

For operation and maintenance each separate unit or resource, about which information is required, or the operation of which is influenced from the outside of the system, is represented by a managed object. Each information exchange referable to the management of operations or units, which must be influenced or which must report something (such as set up of data, assignment of name, or management of alarms) is done in the form of operations on, or notes from managed objects.

A managed object includes attributes and can also have a relation to other managed objects. A number of different operations can be directed towards a managed object and events can be generated by such objects.

Below an account of deficiencies of TMN will be given.

Network elements and subordinated managing systems are managed by a managing system by means of operations towards the managed objects in the managed systems and supervision of notifications transmitted by the managed system.

Allowed operations towards managed objects in the managed system are determined by an information model of the managed system, together with the notifications, which can be transmitted. The information model states:
- which classes of managed objects that are defined,
- which operations the managed objects in these classes accept,
- which notifications that the managed objects are expected to transmit,
- how many instances that can be created or removed, in each class of managed objects,
- dependences between managed objects, e.g. that one managed object requires existence of another one,
- dependences in a managed object, e.g. that a specific attribute value of one attribute is only allowed if another attribute is set to a specific value or if the managed object only can be removed if it is in a specific state,
- the purpose and intention with managed objects and their notifications.

To be meaningful the managing system must know the information model of the managed system. This is in TMN. called "shared management knowledge".

At a change of the information model the management model must be updated in accordance with this change. In conventional systems these changes are made by:
- Definition of the new information model. This is made by specifications for managed objects written as GDMO/ASN.1 templates (GDMO - Guidelines for the Definition of Managed Objects according to CCITT rec. X.722 ISO/IEC 10165-4) and ER-diagrams (Entity-Relationship diagrams) for the managed objects. The specifications for the managed objects state formally (machine readable) syntax (e.g. operations and notifications) for the managed object.

All other parts of the information model, as dependences, the number of instances etc., are stated informally as comments in natural language.
- Implementation and verification of the new information model in the managing system and the managed system.
- Confirmation that the managing system and the managed systems are adapted to the same information model by performing accepted test sequences.
- Updating of the network consisting of the managing system and the managed system with this new version of the information model.

That just mentioned above results in a number of problems:
Firstly, the development of managing systems and managed systems must be coordinated, which leads to higher development costs and/or a delayed introduction of new services on the market.
Secondly, the absence of formalism with respect to the specifications of the managed systems, makes implementation, verification and acceptance of both managing system and managed systems to a difficult and time demanding task, since the interpretation of the specifications is open to discussion.
Thirdly, updating of networks must be planned and carried out carefully, as there are dependences between different versions of the managing systems and managed systems. This involves a delayed introduction of new services in the network.

The purpose of management according to the TMN model is to be a framework for standardization of management for telecom networks and open systems. The management structure strongly influences the management paradigm for new system architectures. There are strong reasons to assume the management paradigm according to the TMN model for the whole management and not only for domains subjected to standardization. The main reason for this is that it is desirable to be able to develop and design management functions in a uniform way.

### Summary of the invention

It is a purpose of the invention to design a managed object, which should be able to communicate with unknown future objects. It should be possible for the original object to be related to and to co-operate with an unknown object without modification, or even reloading of the original object.

Said purpose is attained by the method defined by way of introduction being characterized in that the managed objects are implemented in the subsystem, uncoordinatedly with respect to other subsystems, in a way that they can be connected to and transmit messages to other objects in other subsystems, and without knowing the type of objects in the other subsystems, by designing a first object for co-operation with an abstract object defining an interface consisting of unimplemented methods, which may be called by the first object, and having, at later design of a second object unknown to said first object and intended to co-operate with the first object, the second object to inherit the abstract object and implement the inherited methods, so that the first object at co-operation with the second object will consider it as being of said abstract type.

Advantageous embodiments of the invention have obtained the characterizing features stated in the respective dependent claims.

### Description of the drawings.

A number of embodiments of the invention will now be described below in greater detail with reference to the enclosed drawings, on which
Figures 1-9 in block diagrams illustrate problems, which can appear at the use of technology according to the state of the art in connection with the design of managing systems, where
Figures 1-4 concern problems, which can appear in connection with reuse of library components in the managed objects in managed systems,
Figures 5 and 6 refer to problems, which can appear at the implementation of a managed system in a layered system architecture,
Figures 7-10 illustrate how the problems according to Figures 1-6 can be generally solved by design of a specific type of object, which should be able to co-operate with unknown future managed objects,
Figures 11-14 specify design of objects according to Figures 10-14, the object type being assumed to belong to a platform system,

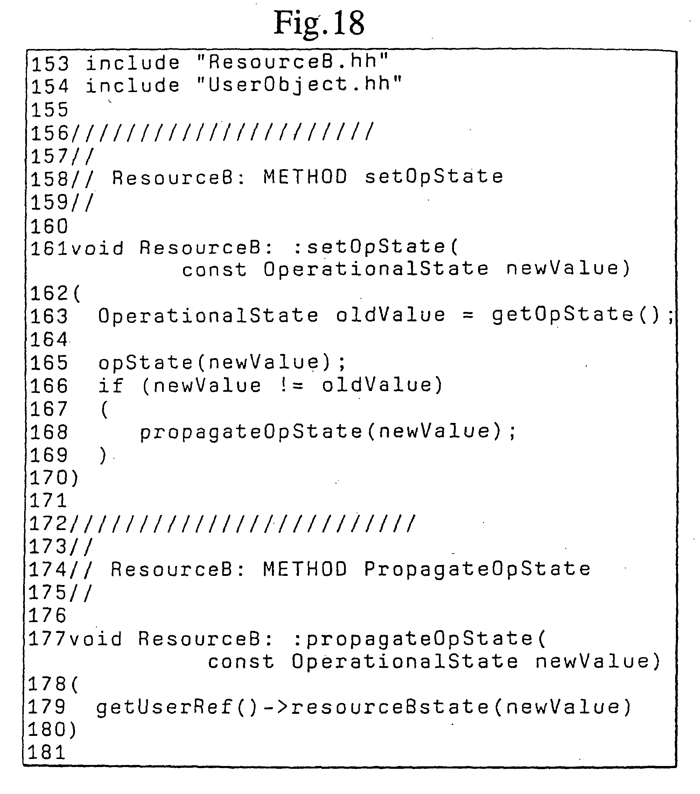

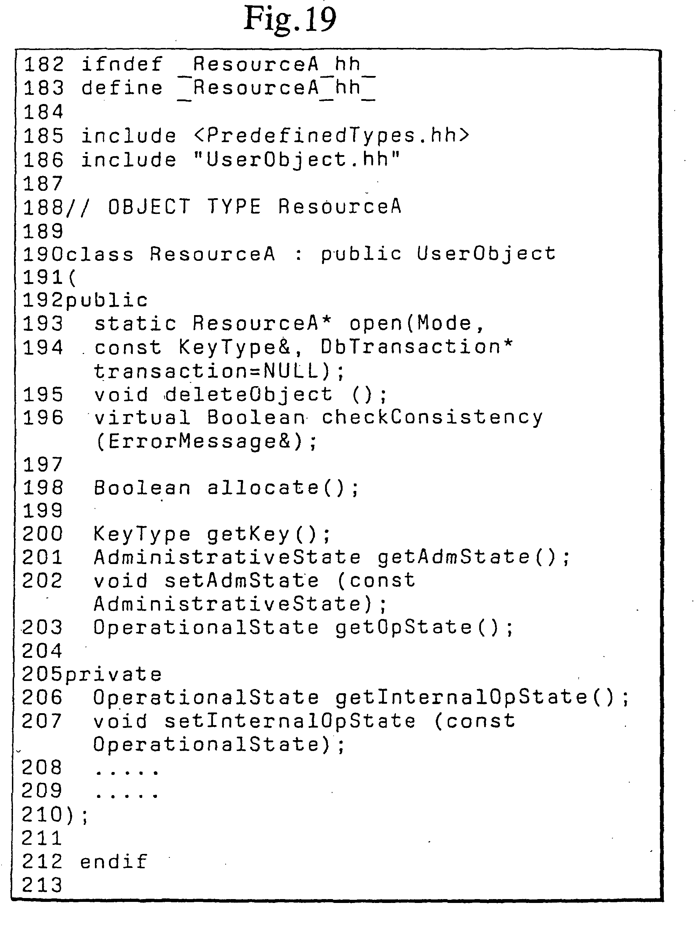

Figures 15-20 show the implementation in the program code C++ of dependences between the designed objects according to Figures 11-14.

### Description of embodiments

A managed system consists of several subsystems, more exactly a system platform and a number of applications. According to the invention these subsystems are developed uncoordinatedly and are loaded separately.

At the development of an application - or a system platform - there are libraries with reusable components. These components should be incorporated and combined in different ways in the different subsystems.

The two different problems described above have certain properties in common. There are system components, which are developed uncoordinatedly, but still there are dependences between the components. To keep such dependences it is necessary that the components should be able to communicate with other components which are separately developed and even loaded.

The design process described below in greater detail is usable in two different contexts with similar problems.

The first problem refers to reuse of library components.

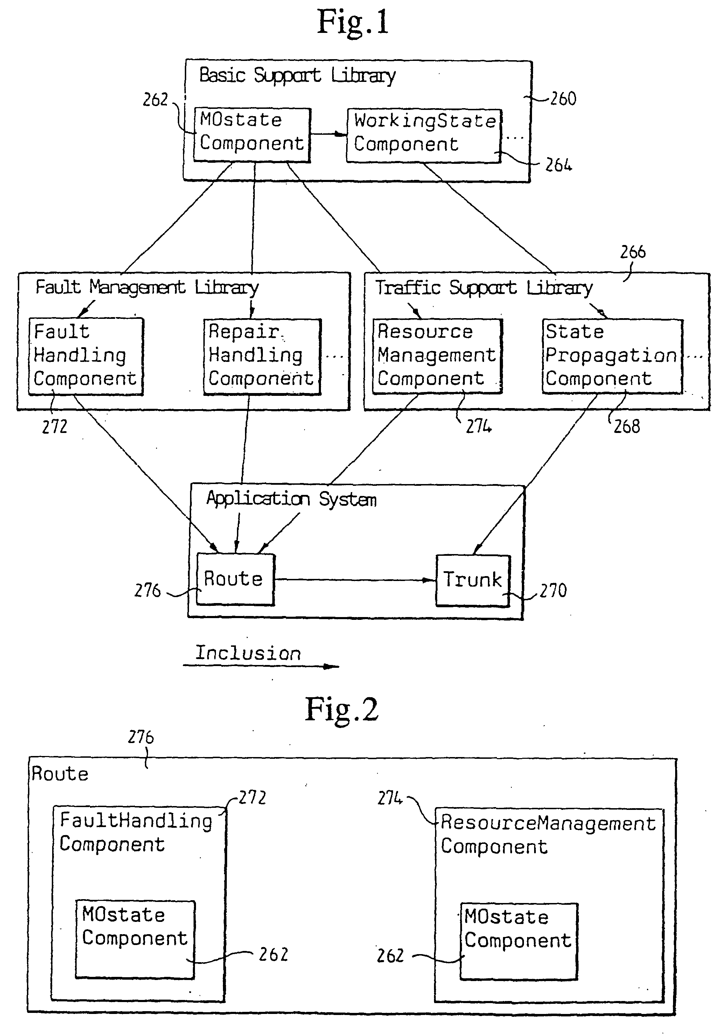

At design of a managed system there are libraries with reusable components, which can be incorporated in the objects of the managed system. As is illustrated in Figure 1 there are first a main library 260 including components with basic functionality, such as MOstateComponent 262 and WorkingStateComponent 264. These components include state attributes common to many different types of managed objects. The functionality of these basic components is reused by other components with a more specialized functionality. In the traffic management library 266 there is e.g. a StatePropagationComponent 268, which has the ability to transfer state transitions in MOstateComponent 262 to the related dependent object 270.

It should be emphasized that components as well as the managed objects are supposed to be implemented in an object oriented language. Both the components and the managed objects are thus really objects. But the components can not exist as identifiable objects by themselves in an application. They can only form a part of managed objects.

A straightforward way to implement components, which depend on other basic components, e.g. the components in the fault handling and the traffic management libraries in Figure 1, is to include the basic components either by heritage or aggregating. This causes however many problems. This depends upon the fact that several components, e.g. FaultHandlingComponent 272 and ResourceManagementComponent 274, which inherit or aggregate the same basic component, e.g. MOstateComponent 262, can be included in the same managed object Route 276, compare Figure 2. This implies that there will be several copies of the basic component in the managed object, which will cause consistency problems if the basic component includes data, which is visible external to the components. Data of MOstateComponent should in other words be available for another functionality in the managed object than those components in which MOstateComponent is included.

There is a way to avoid the problem described above.

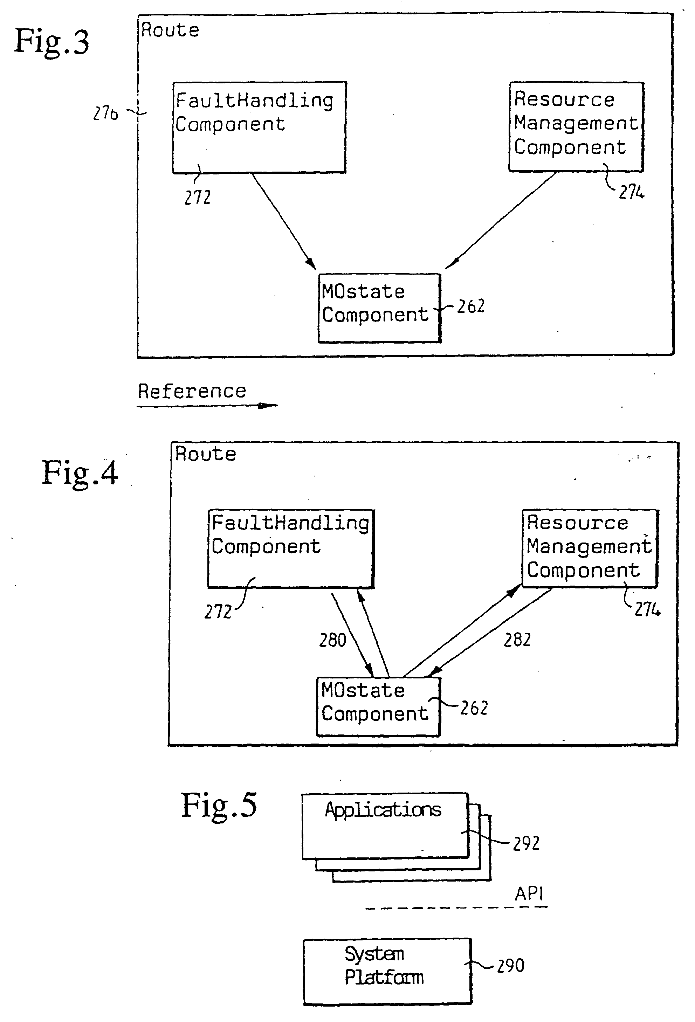

MOstateComponent should not be inherited or aggregated in components which depend on this component. Instead the dependent components should include reference attributes to MOstateComponent. Thus the latter will be a component of its own in those objects in which it is included. Components which need to access MOstateComponent will then each include a reference to the same instance of the MO-state component, compare Figure 3.

As has been mentioned earlier a component, such as ResourceManagementComponent 274 and FaultHandlingComponent 272, can include a functionality which is triggered by state changes in MOstateComponent 262. The latter must therefore be able to transmit state change messages to other components. One problem is however that the receivers of these messages are unknown at the design of MOstateComponent. MOstateComponent 262 must in some way be able to communicate, cf. arrows 280, 282, with an arbitrary later appearing component, compare Figure 4.

The second problem refers to a layered system architecture.

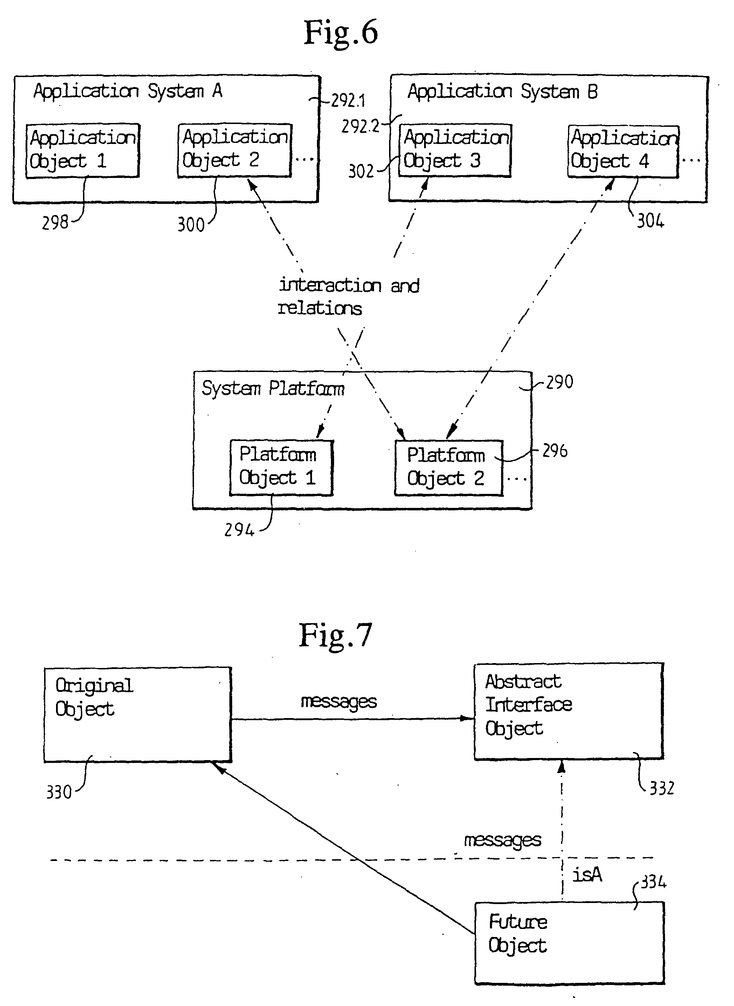

A managed system can be implemented in a layered architecture. More exactly, there are system platforms with basic functions, which can be reused by different applications, compare Figure 5. The system platform 290 i.a. includes different kinds of common telecom services. The application can thus delegate many tasks to the system platform. The system platform 290 and the applications 292 are loaded separately. It must be possible to load an application and link it to the system platform without reloading the platform.

Both the system platform 290 and the applications 292 include managed objects. The objects 294 and 296 in the platform 290 can e.g. represent resources, as switches, transmission routes, trunks etc. The objects 298,300 and 302,304 in the applications 292.1 resp 292.2 can be related to and co-operate with the resources in the system platform, compare Figure 6. An object in an application can delegate some tasks to an object in the system platform. Objects in the applications may thus depend on related objects in the system platform to be able to work. As the system platform is known at the development of an application it is no problem to design the objects in the applications for communicating with the objects in the system platform. As has been mentioned earlier the objects in the applications can however be dependent on the objects in the system platform. This implies that objects in the system platform should be able to transfer state changes, as has been described earlier above, to objects in the applications. This implies that objects in the platform should be able to be related to and take initiative to calling objects, which are unknown at the design of the platform system.

Above two cases with similar problems have been described. Here will now follow a description of how these problems can be solved.

More exactly, the real problem in each of the two cases is to design an object, which should be able to communicate with unknown future objects. It must be possible for the original object to be related to and to co-operate with an unknown object without modification, or even reloading of the original object.

This problem can be solved with the design principle illustrated in Figure 7. The original object 330 is designed to co-operate with an abstract object 332. The abstract object defines an interface consisting of unimplemented methods. These are the methods, which can be called by the original object. At the design of an object 334 designated to co-operate with the original object it must inherit the abstract object 332 and implement its inherited methods. At the co-operation with an unknown type of object the original object 330 will consider this as being said abstract.type 332. At call of a method defined in the interface of the abstract object 332 the call will be delegated to implementation in the real object 330 via late binding.

Avoidance of reloading of the original object at loading of the future objects is achieved by dynamic linking.

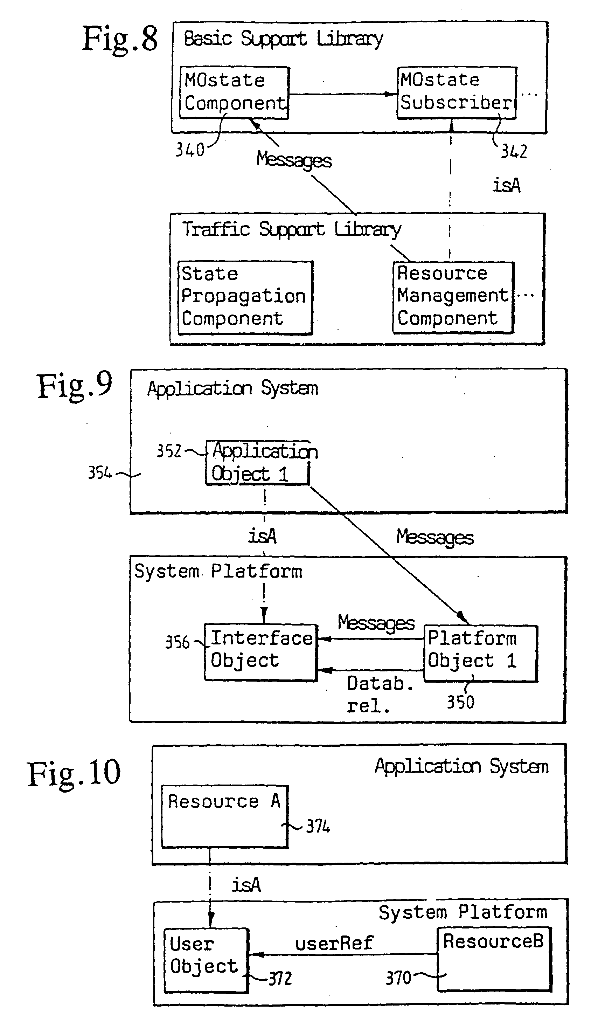

Figure 8 illustrates how the just described design can be used for the design of basic library components. MOstateComponent 340 is designed to communicate with objects, which inherit an abstract object: MOstateSubscriber 342. This abstract object defines methods called by MOstateComponent when a state change occurs. If a component should subscribe to state changes in MOstateComponent, it must inherit MOstateSubscriber 342 and implement the answer to the respective state transition notifications. The subscribing component must of course also state itself as a subscriber to MOstateComponent.

The principles of design described with reference to Figure 7 can also be used for designing objects in a system platform to co-operate with application specific objects. This is illustrated in Figure 9, where object PlatformObject1 350 is designed to co-operate with object 352 in application system 354. An object in an application, which should co-operate with the object Platformobject1 350 must inherit the abstract object Interfaceobject 356. Further there is a data base relationship between PlatformObject1 350 and InterfaceObject 356. This implies that the objects which inherit InterfaceObject 356 can set up relations with PlatformObject1 350. To make it possible to load applications without reloading of the system platform dynamic linking is used.

Often an object in an application system is state dependent of another object in the system platform. This design makes it possible to implement such state dependences in essentially the same way as for objects which are known to each other when they are implemented, as will be described in greater detail further below.

Dependences between uncoordinated objects can be specified and implemented in essentially the same way as between coordinated objects, which has been described earlier above. Here the same examples will be used to show the design and implementation of dependences between uncoordinated objects. It is however assumed here that the object type ResourceB belongs to a platform system. Thus, with reference to Figure 10, various kinds of objects in various application systems can be related to and co-operate with the object ResourceB 370. The object type ResourceB 370 is related to UserObject 372 via a data base relationship. ResourceA 374 inherits UserObject 372 to be able to be related to ResourceB 370. In the following it will be shown how these objects are specified and implemented. The same pseudo syntax as above will be used.

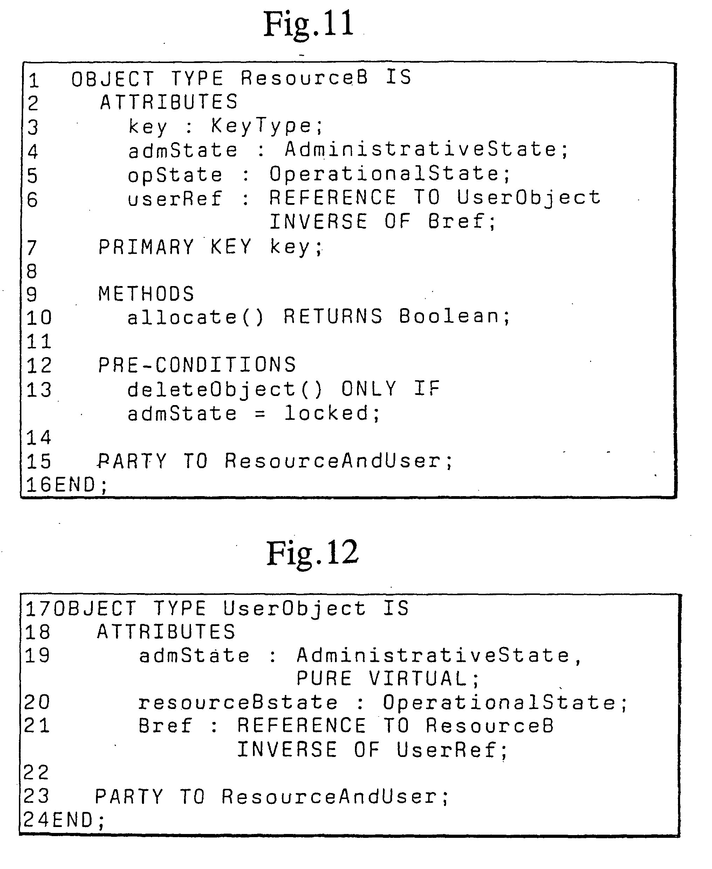

The specification of the object ResourceB is found in Figure 11. The specification includes two state attributes: admState and opState, a method to allocate instances of ResourceB and a precondition which states that to enable erase of a ResourceB object it must be locked. This is essentially the same as earlier. The only difference is that in this example ResourceB is related to UserObject instead of ResourceA. The relation is established via a reference attribute userRef, line 6.

In Figure 12 the object UserObject is specified. It includes the state attribute admState. It can however be noted that this attribute is specified as being purely virtual, line 19. This implies that the UserObject in fact will not include the attribute admState. The interface of UserObject will however include unimplemented write and read methods for this attribute. The real implementation of these virtual methods will appear in the respective subtypes of UserObject. Besides there are another attribute resourceBstate, which is assumed to keep the value of opState in the related object ResourceB. Further, the UserObject has a reference attribute Bref, which is used to establish relations with objects of the type resourceB, line 21.

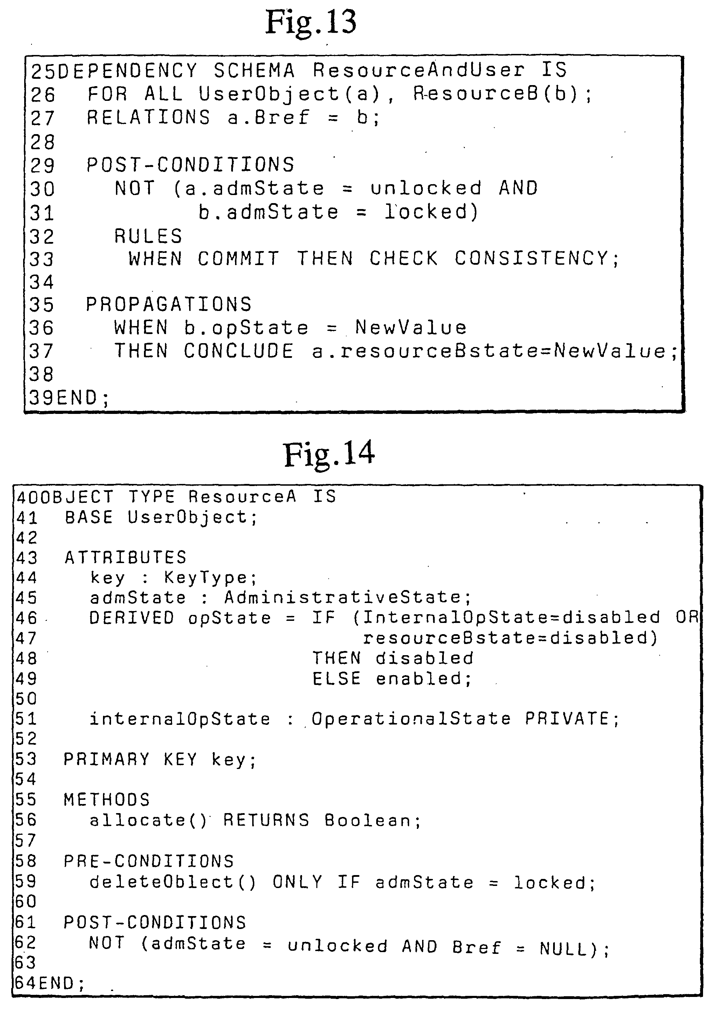

A dependence scheme, which specifies end conditions, including both the object UserObject and the object ResourceB is found in Figure 13. There is an end condition, lines 29-31, which states that admState of UserObject depends on admState in ResourceB in such a way that an object UserObject can not be locked up if the related object ResourceB is locked.

In Figure 13 it is further specified that when a value of opState in an object ResourceB is changed, the new value should be propagated to the related instance of UserObject. In Figure 13 there is no end condition specified which relates to opState, it is only stated that changes of opState in ResourceB should be propagated to the attribute resourceBstate in UserObject, lines 36 and 37. This implies that all subtypes of UserObject are not necessarily opState dependent on ResourceB, but each subtype of UserObject can manage the opState dependence of ResourceB in its own way.

In Figure 14 the specification of ResourceA is shown. ResourceA is specified as being a subtype of UserObject (line 41). This implies that ResourceA inherits the attributes, methods, conditions and the propagations in UserObject. All the purely virtual specifications in UserObject must be specified and implemented in ResourceA. As appears from Figure 7 the value of opState in ResourceA is derived from the attributes internalOpState and resourceBstate (which is inherited from UserObject), lines 46-49.

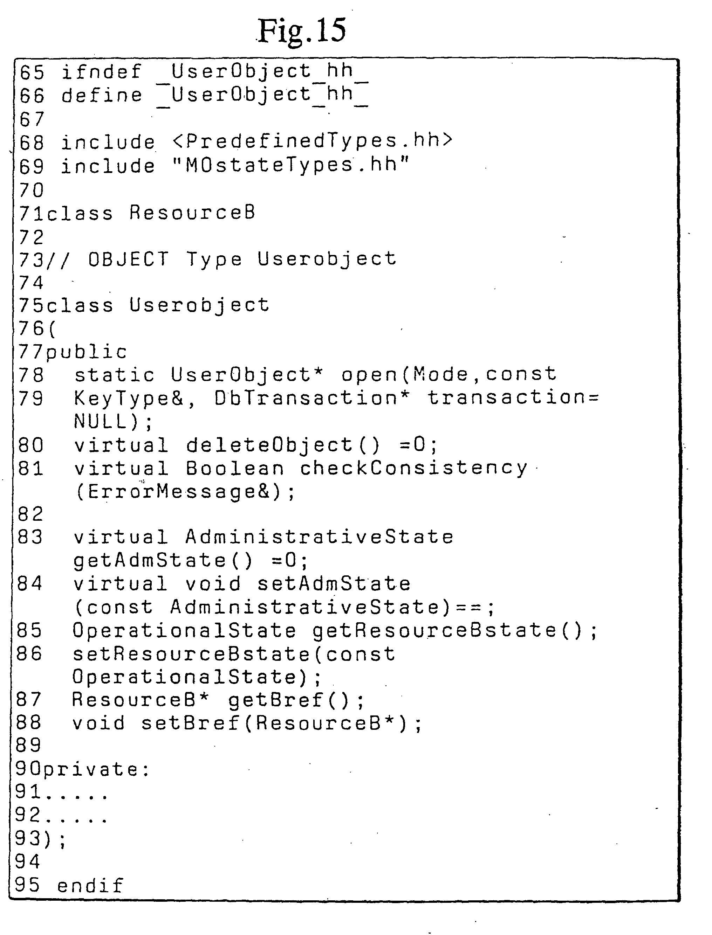

As has been mentioned earlier the implementation is essentially the same as when the objects belong to the same system. The difference is that a certain part of the functionality of the dependent object which uses ResourceB is implemented in UserObject. As earlier the code can automatically be generated from the specifications by a compiler. The declaration file which is generated from the specification of UserObject in Figure 12 is found in Figure 15.

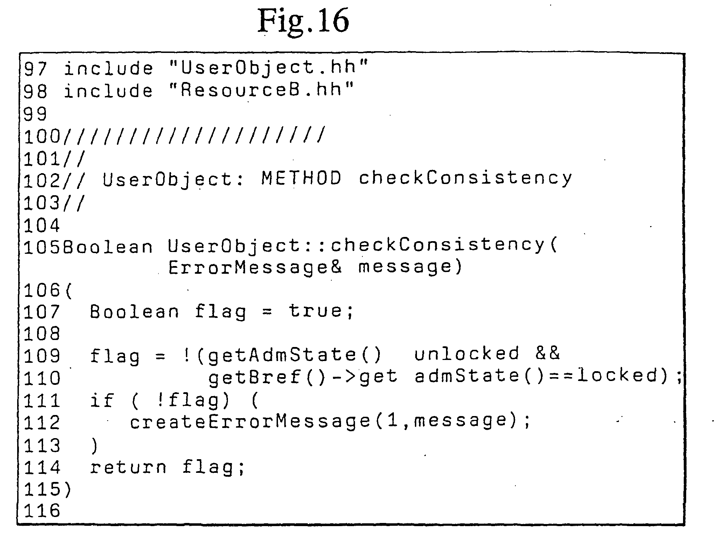

The method checkConsistency in UserObject checks the dependence between the admState attributes, which are stated in the dependence scheme in Figure 13. The implementation of this method is shown in Figure 16. To check this condition the value of admState in UserObject must be read. This explains why there must be a purely virtual specification of admState in UserObject, even if this attribute is not really included in UserObject.

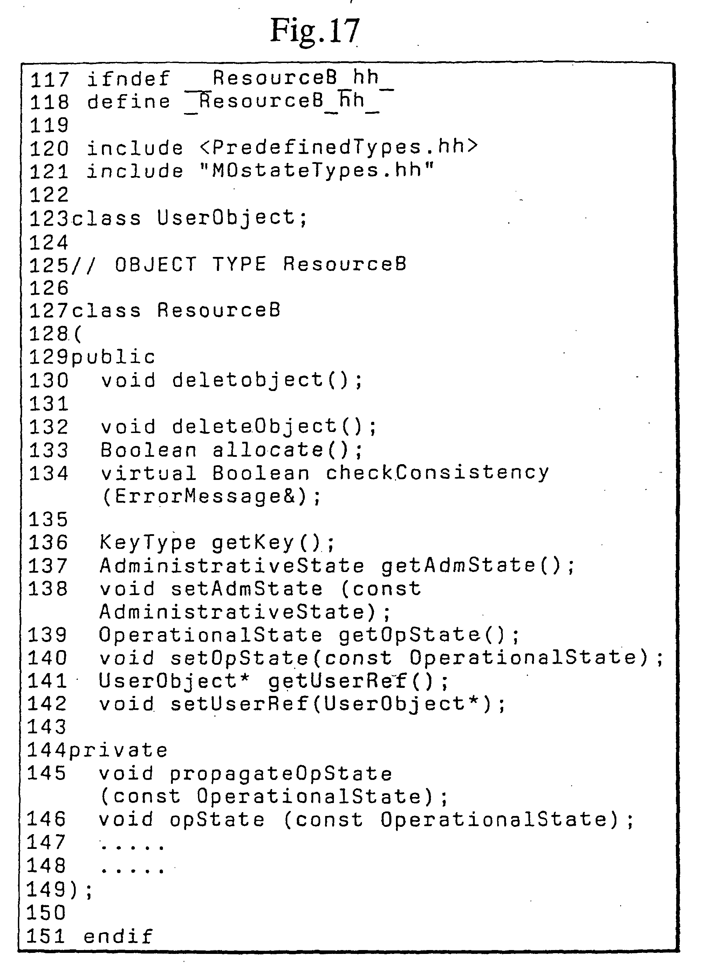

The declaration file which is generated by the specification of ResourceB in Figure 11 is found in Figure 17. The implementation of the method propagateOpstate is however somewhat different, compare Figure 8. The new value is propagated to the attribute ResourceBstate in the related userObject instance. The admState dependence between UserObject and ResourceB must be checked at updating of the object ResourceB as well as at updating of UserObject instances. Therefore, this condition is implemented in the method checkConsistency in ResourceB.

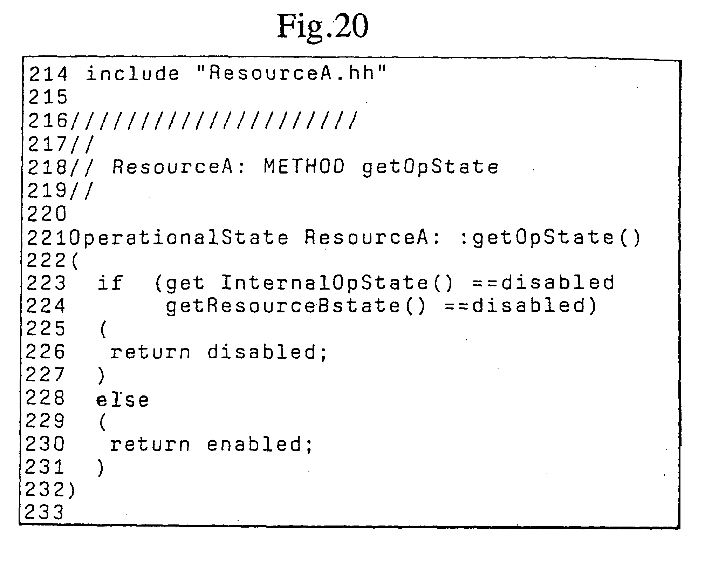

Figure 9 shows the declaration file, which is generated from the specification of ResourceA. The opState dependence of ResourceB is implemented by derivation of the value of opState from resourceBstate and internalOpState, compare Figure 20.

The advantages of the above described are the following.

Dependences and co-operation between uncoordinated objects can be specified and implemented in the same way as dependences between objects in the same subsystem. This implies that they are visible to and can be interpreted by a managing system.

The above illustrated process for maintenance of dependences between uncoordinated objects in a controlled and visible way facilitates implementation of a determinable management model in a layered architecture.

The degree of reuseability of the library components can be improved by a high degree of flexibility when combinations of components are concerned.

## Claims

1. A method for implementing a managed object in a subsystem of a managed system in a management network with at least one managing system and at least one managed system, for telecom or open systems, said managed system consisting of subsystems forming each a part of the managed system including one or more managed objects, **characterized by** implementing the managed objects in the subsystem, uncoordinatedly with respect to other subsystems, in such a way that they can be connected to and transmit messages to other objects in other subsystems, and without knowing the type of objects in the other subsystems, by designing a first object (330) for co-operation with an abstract object (332) defining an interface consisting of unimplemented methods, which may be called by the first object, and letting, at later design of a second object (334) unknown to said first object and intended to co-operate with the first object, the other object inherit the abstract object and implement the inherited methods, so that the first object at co-operation with the second object will consider it as being of said abstract type.

2. A method according to claim 1, **characterized by** delegating, at call of a method defined in the interface of the abstract object, the call to the implementation in the real object by means of late binding.

3. A method according to claims 1 or 2, **characterized by** reloading, in case of loading of said second object, said first object in the managed system by means of dynamic linking between the respective subsystems.

4. A method according to any of claims 1-3, **characterized by** locating said first and second objects in first and second subsystems, respectively.

5. A method according to claim 4, **characterized by** using dynamic linking to enable loading in the managed system of said second subsystem without reloading of said first subsystem.

## Patentansprüche

1. Verfahren zum Implementieren eines verwalteten Objekts in einem Teilsystem eines verwalteten Systems in einem Verwaltungsnetz mit mindestens einem verwaltenden System und mindestens einem verwalteten System für Telekom- oder offene Systeme, wobei das verwaltete System aus Teilsystemen besteht, die jedes einen Teil des verwalteten Systems bilden, inkludierend ein oder mehr verwaltete Objekte, **gekennzeichnet durch** Implementieren der verwalteten Objekte in dem Teilsystem, unkoordiniert in Bezug auf andere Teilsysteme, auf eine derartige Weise, dass sie verbunden sein können mit und Nachrichten übertragen können zu anderen Objekten in anderen Teilsystemen, und ohne Kenntnis des Typs von Objekten in den anderen Teilsystemen, **durch** Gestalten eines ersten Objekts (330) für eine Kooperation mit einem abstrakten Objekt (332), das eine Schnittstelle definiert, die aus nicht-implementierten Methoden besteht, die **durch** das erste Objekt aufgerufen werden könne, und, in einer späteren Gestaltung eines zweiten Objekts (334), unbekannt zu dem ersten Objekt und gedacht, mit dem ersten Objekt zusammenzuarbeiten, das andere Objekt das abstrakte Objekt erben und die geerbten Methoden implementieren lassen, sodass das erste Objekt in Kooperation mit dem zweiten Objekt es betrachten wird, vom abstrakten Typ zu sein.

2. Verfahren nach Anspruch 1, **gekennzeichnet durch** Delegieren bei Aufruf einer Methode, die in der Schnittstelle des abstrakten Objekts definiert ist, des Aufrufs zu der Implementierung in dem realen Objekt mittels einer späten Bindung.

3. Verfahren nach Ansprüchen 1 oder 2, **gekennzeichnet durch** erneutes Laden, im Fall eines Ladens des zweiten Objekts, des ersten Objekts in dem verwalteten System mittels einer dynamischen Verknüpfung zwischen den jeweiligen Teilsystemen.

4. Verfahren nach beliebigen von Ansprüchen 1-3, **gekennzeichnet durch** Lokalisieren der ersten und zweiten Objekte in ersten bzw. zweiten Teilsystemen.

5. Verfahren nach Anspruch 4, **gekennzeichnet durch** Verwenden einer dynamischen Verknüpfung, um Laden in dem verwalteten System des zweiten Teilsystems ohne erneutes Laden des ersten Teilsystems zu ermöglichen.

## Revendications

1. Procédé pour mettre en place un objet géré dans un sous-système d'un système géré dans un réseau de gestion avec au moins un système de gestion et au moins un système géré, pour des systèmes de télécommunication ou des systèmes ouverts, ledit système géré consistant en sous-systèmes constituant chacun une partie du système géré comprenant un ou plusieurs objets gérés, **caractérisé par** la mise en place des objets gérés dans le sous-système, de manière non coordonnée par rapport aux autres sous-systèmes, de telle manière qu'ils puissent être connectés à et envoyer des messages à d'autres objets dans d'autres sous-systèmes, et ce, sans connaître le type des objets situés dans les autres sous-systèmes, en concevant un premier objet (330) pour une coopération avec un objet abstrait (332), en définissant une interface consistant en procédés non mis en place, qui peuvent être appelés par le premier objet, et en faisant hériter, lors de la conception ultérieure d'un second objet (334) inconnu dudit premier objet et censé coopérer avec le premier objet, l'autre objet de l'objet abstrait et en faisant mettre en place les procédés non mis en place, de manière que le premier objet lors de la coopération avec le second objet le considère comme étant dudit type abstrait.

2. Procédé selon la revendication 1, **caractérisé par** le fait de déléguer, lors de l'appel d'un procédé défini dans l'interface de l'objet abstrait, l'appel à la réalisation dans l'objet réel au moyen de l'usage d'un lien retardé.

3. Procédé selon les revendications 1 ou 2, **caractérisé par** le fait de recharger, dans le cas d'un chargement dudit second objet, ledit premier objet dans le système géré au moyen de l'usage d'un lien dynamique entre les sous-systèmes respectifs.

4. Procédé selon l'une quelconque des revendications 1 à 3, **caractérisé par** le fait de placer lesdits premier et second objets dans un premier et un second sous-système, respectivement.

5. Procédé selon la revendication 4, **caractérisé par** le fait d'utiliser un lien dynamique pour permettre le chargement dans le système géré dudit second sous-système sans recharger ledit premier sous-système.
